# EUROPEAN PATENT APPLICATION

(11) **EP 4 841 654 A1**
(43) Date of publication of application: **18.11.2026**
(21) Application number: 26173132.7
(22) Date of filing: 17.04.2026
(51) Int. Cl.: G21K 1/02

(54) **THREE DIMENSIONAL COLLIMATOR FOR A COMPUTED TOMOGRAPHY DETECTOR AND MANUFACTURING METHOD**

(30) Priority: 12.05.2025 US 202519205363
(71) Applicant: GE Precision Healthcare LLC, Waukesha, WI 53188 (US)
(72) Inventor: JACOB, Biju, Niskayuna, 12309-1027 (US); ROSE, James Wilson, Niskayuna, 12309-1027 (US); NOSE, Katsumasa, Waukesha, 53188 (US)
(74) Representative: Kilburn & Strode LLP

(57) **Abstract**

A collimator module (18) includes a plurality of collimator plate sets (84) lined up side by side in a first direction that each include a first collimator plate (86), a second collimator plate (88), and a joint layer (90) disposed between the first collimator plate (86) and the second collimator plate (88) that joins the first collimator plate (86) and the second collimator plate (88) together. An air layer (82) intervenes between adjacent collimator plate sets (84). The collimator module (18) includes a plurality of collimator plates (58) lined up side by side in a second direction orthogonal to the first direction. Each collimator plate (58) of the plurality of collimator plates (58) extends through a respective set of aligned slots (60) formed in the collimator plate sets (84). Both the plurality of collimator plate sets (58) and the plurality of collimator plates (58) extend in a third direction orthogonal to both the first direction and the second direction to form a three-dimensional collimator module (18).

## Description

### BACKGROUND

The subject matter disclosed herein relates to imaging systems and, more particularly, to methods and systems for collimators of a computed tomography detector.

Non-invasive imaging technologies allow images of the internal structures or features of a patient to be obtained without performing an invasive procedure on the patient. In particular, such non-invasive imaging technologies rely on various physical principles, such as the differential transmission of X-rays through the target volume or the reflection of acoustic waves, to acquire data and to construct images or otherwise represent the observed internal features of the patient.

For example, in computed tomography (CT) and other X-ray based imaging technologies, X-ray radiation spans and is transmitted through a subject of interest, such as a human patient, and a portion of the X-ray radiation impacts an X-ray detector where image data is collected. In digital X-ray systems a photodetector produces signals representative of the amount or intensity of X-ray radiation impacting discrete pixel regions of X-ray detector elements or sensors. The signals may then be processed to generate an image that may be displayed for review.

Many X-ray imaging systems are equipped with a post-patient collimator arranged in the X-ray path between the X-ray source and the X-ray detector, mainly to provide for the rejection of scattered X-ray photons. The collimator structure, while providing sufficient scatter rejection and allowing good detection efficiency. The main parameter of the collimator that determines the (geometric) detection efficiency is thickness of the plates. The thicker the plate, the higher the scatter rejection, but the poorer the geometric efficiency.

### SUMMARY

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In one embodiment, a collimator module is provided. The collimator module includes a plurality of collimator plate sets lined up side by side in a first direction. Each collimator plate set of the plurality of collimator plate sets includes a first collimator plate, a second collimator plate, and a joint layer disposed between the first collimator plate and the second collimator plate that joins the first collimator plate and the second collimator plate together. An air layer intervenes between adjacent collimator plate sets of the plurality of collimator plate sets. The collimator module also includes a plurality of collimator plates lined up side by side in a second direction orthogonal to the first direction. Each collimator plate of the plurality of collimator plates extends through a respective set of aligned slots formed in the plurality of collimator plate sets. Both the plurality of collimator plate sets and the plurality of collimator plates extend in a third direction orthogonal to both the first direction and the second direction to form a three-dimensional collimator module.

In another embodiment, an imaging detector assembly is provided. The imaging detector assembly includes a detector array. The imaging detector assembly further includes a three-dimensional (3D) collimator module disposed over the detector array. The 3D collimator module includes a plurality of collimator plate sets lined up side by side in a first direction. Each collimator plate set of the plurality of collimator plate sets includes a first collimator plate, a second collimator plate, and a joint layer disposed between the first collimator plate and the second collimator plate that joins the first collimator plate and the second collimator plate together. An air layer intervenes between adjacent collimator plate sets of the plurality of collimator plate sets. The 3D collimator module also includes a plurality of collimator plates lined up side by side in a second direction orthogonal to the first direction. Each collimator plate of the plurality of collimator plates extends through a respective set of aligned slots formed in the plurality of collimator plate sets. Both the plurality of collimator plate sets and the plurality of collimator plates extend in a third direction orthogonal to both the first direction and the second direction.

In a further embodiment, a computed tomography (CT) imaging system is provided. The CT imaging system includes a radiation source configured to emit radiation. The CT imaging system also includes a CT detector assembly configured to detect incident radiation. The CT detector assembly includes a detector array. The CT imaging detector further includes a three-dimensional (3D) collimator module disposed over the detector array. The 3D collimator module includes a plurality of collimator plate sets lined up side by side in a first direction. Each collimator plate set of the plurality of collimator plate sets includes a first collimator plate, a second collimator plate, and a joint layer disposed between the first collimator plate and the second collimator plate that joins the first collimator plate and the second collimator plate together. An air layer intervenes between adjacent collimator plate sets of the plurality of collimator plate sets. The collimator module also includes a plurality of collimator plates lined up side by side in a second direction orthogonal to the first direction. Each collimator plate of the plurality of collimator plates extends through a respective set of aligned slots formed in the plurality of collimator plate sets. Both the plurality of collimator plate sets and the plurality of collimator plates extend in a third direction orthogonal to both the first direction and the second direction.

### BRIEF DESCRIPTION OF THE DRAWINGS

These and other features, aspects, and advantages of the disclosed subject matter will become better understood when the following detailed description is read with reference to the accompanying drawings in which like characters represent like parts throughout the drawings, wherein:
FIG. 1 is a combined pictorial view and block diagram of a computed tomography (CT) imaging system, in accordance with aspects of the present disclosure;
FIG. 2 depicts a schematic side view of components of a detector assembly, in accordance with aspects of the present disclosure;
FIG. 3 depicts a schematic side view of a typical three-dimensional (3D) collimator geometry along the XY plane;
FIG. 4 depicts a schematic side view of the typical 3D collimator geometry along the YZ plane;
FIG. 5 depicts a schematic side view of a 3D collimator geometry along the XY plane (e.g., having stiffened X plate sets with Z plates located at a bottom edge), in accordance with aspects of the present disclosure;
FIG. 6 depicts a schematic side view of a 3D collimator geometry along the YZ plane (e.g., having stiffened X plate sets with Z plates located at a bottom edge), in accordance with aspects of the present disclosure;
FIG. 7 depicts a schematic side view of a 3D collimator geometry along the XY plane (e.g., having stiffened X plate sets with Z plates located at a top edge), in accordance with aspects of the present disclosure;
FIG. 8 depicts a schematic side view of a 3D collimator geometry along the YZ plane (e.g., having stiffened X plate sets with Z plates located at a top edge), in accordance with aspects of the present disclosure;
FIG. 9 depicts a schematic side view of a 3D collimator geometry along the XY plane (e.g., having stiffened X plate sets with Z plates centrally located), in accordance with aspects of the present disclosure;
FIG. 10 depicts a schematic side view of a 3D collimator geometry along the YZ plane (e.g., having stiffened X plate sets with Z plates centrally located), in accordance with aspects of the present disclosure;
FIG. 11 depicts a schematic side view of a 3D collimator geometry along the XY plane (e.g., having stiffened X plate sets and stiffened Z plate sets), in accordance with aspects of the present disclosure;
FIG. 12 depicts a schematic side view of a 3D collimator geometry along the YZ plane (e.g., having stiffened X plate sets and stiffened Z plate sets), in accordance with aspects of the present disclosure;
FIG. 13 is a flow chart of a method for manufacturing a 3D collimator; and
FIG. 14 a schematic side view of components of a detector assembly (e.g., having direct-conversion type detector), in accordance with aspects of the present disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present subject matter, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be nonlimiting, and thus additional numerical values, ranges, and percentages are within the scope of the disclosed embodiments.

While aspects of the following discussion are provided in the context of medical imaging, it should be appreciated that the disclosed techniques are not limited to such medical contexts. Indeed, the provision of examples and explanations in such a medical context is only to facilitate explanation by providing instances of real-world implementations and applications. However, the disclosed techniques may also be utilized in other contexts, such as image reconstruction for non-destructive inspection of manufactured parts or goods (i.e., quality control or quality review applications), and/or the non-invasive inspection of packages, boxes, luggage, and so forth (i.e., security or screening applications). In general, the disclosed techniques may be useful in any imaging or screening context or image processing or photography field where a collimator is utilized.

As mentioned above, the main parameter of the collimator that determines the (geometric) efficiency is the thickness of plates. A technique has been utilized to stiffen thinner plates in the building of collimators to improve geometric efficiency. However, this technique only applied to two-dimensional (2D) collimators (having plates along only one direction). For large coverage CT systems, a 2D collimator is not sufficient to provide scatter rejection. Instead, these large coverage CT require a three-dimensional 3D collimator (having plates in both channel and slice directions).

The present disclosure provides embodiments for a technique to build a 3D collimator incorporating stiffened thin plates. This enables the achievement of good scatter rejection and geometric efficiency. The disclosed embodiments enable thinner plates (enabled by the stiffener) to significantly improve (expected improvement between 10 percent to 20 percent) geometric efficiency (compared to a 3D collimator utilizing plates with a typical thickness (e.g., 200 micrometers). The disclosed embodiments provide a comparable improvement in dose efficiency of the system.

The plates (e.g., made of tungsten or molybdenum) can be made with a thickness in the range of 30 to 100 micrometers can be stiffened with a joint layer (e.g., foam or epoxy) to make X plates (that extend in the slice direction or along the patient axis). After building the stiffened X plates, slots for Z plates (that extend in the channel direction) are made in the X plates via laser cutting, wire electrical discharge machining (EDM), or other techniques. The Z plate height is typically less than half of the height of the X plates so that the slots will not affect the mechanical strength. Slots can be made in the edges or also in the center of X-plates. 3D collimators can be assembled with similar techniques used for conventional collimators. In certain embodiments, Z plates may be stiffened in a similar manner.

The disclosed embodiments include a collimator module that includes a plurality of collimator plate sets lined up side by side in a first direction. Each collimator plate set of the plurality of collimator plate sets includes a first collimator plate, a second collimator plate, and a joint layer disposed between the first collimator plate and the second collimator plate that joins the first collimator plate and the second collimator plate together. An air layer intervenes between adjacent collimator plate sets of the plurality of collimator plate sets. The collimator module also includes a plurality of collimator plates lined up side by side in a second direction orthogonal to the first direction. Each collimator plate of the plurality of collimator plates extends through a respective set of aligned slots formed in the plurality of collimator plate sets. Both the plurality of collimator plate sets and the plurality of collimator plates extend in a third direction orthogonal to both the first direction and the second direction to form a three-dimensional collimator module.

In certain embodiments, the joint layer is configured to stiffen a respective collimator plate set to enable the first collimator plate and the second collimator plate to be thinner in the first direction compared to a collimator plate set without the joint layer between the first collimator plate and the second collimator plate. In certain embodiments, the first direction is a channel direction, the second direction is a slice direction, and the third direction is a direction of X-ray emission. In certain embodiments, the joint layer includes a foam layer. In certain embodiments, the joint layer includes an epoxy layer. In certain embodiments, the respective set of aligned slots are formed in respective centers of the plurality of collimator plate sets relative to the third direction. In certain embodiments, the respective set of aligned slots are formed adjacent respective edges of the plurality of collimator plate sets relative to the third direction.

In certain embodiments, the plurality of collimator plates include an additional plurality of collimator plate sets lined up side by side in the second direction, wherein each collimator plate set of the additional plurality of collimator plate sets includes a third collimator plate, a fourth collimator plate, and an additional joint layer disposed between the third collimator plate and the fourth collimator plate that joins the third collimator plate and the fourth collimator plate together, and wherein an additional air layer intervenes between adjacent collimator plate sets of the additional plurality of collimator plate sets. In certain embodiments, each collimator plate set of the additional plurality of collimator plate sets extends through the respective set of aligned slots formed in the plurality of collimator plate sets.

The disclosed embodiments include an imaging detector assembly that includes a detector array. The imaging detector assembly further includes a three-dimensional (3D) collimator module disposed over the detector array. The 3D collimator module includes a plurality of collimator plate sets lined up side by side in a first direction. Each collimator plate set of the plurality of collimator plate sets includes a first collimator plate, a second collimator plate, and a joint layer disposed between the first collimator plate and the second collimator plate that joins the first collimator plate and the second collimator plate together. An air layer intervenes between adjacent collimator plate sets of the plurality of collimator plate sets. The 3D collimator module also includes a plurality of collimator plates lined up side by side in a second direction orthogonal to the first direction. Each collimator plate of the plurality of collimator plates extends through a respective set of aligned slots formed in the plurality of collimator plate sets. Both the plurality of collimator plate sets and the plurality of collimator plates extend in a third direction orthogonal to both the first direction and the second direction.

The disclosed embodiments include a CT imaging system that includes a radiation source configured to emit radiation. The CT imaging system also includes a CT detector assembly configured to detect incident radiation. The CT detector assembly includes a detector array. The CT imaging detector further includes a three-dimensional (3D) collimator module disposed over the detector array. The 3D collimator module includes a plurality of collimator plate sets lined up side by side in a first direction. Each collimator plate set of the plurality of collimator plate sets includes a first collimator plate, a second collimator plate, and a joint layer disposed between the first collimator plate and the second collimator plate that joins the first collimator plate and the second collimator plate together. An air layer intervenes between adjacent collimator plate sets of the plurality of collimator plate sets. The collimator module also includes a plurality of collimator plates lined up side by side in a second direction orthogonal to the first direction. Each collimator plate of the plurality of collimator plates extends through a respective set of aligned slots formed in the plurality of collimator plate sets. Both the plurality of collimator plate sets and the plurality of collimator plates extend in a third direction orthogonal to both the first direction and the second direction.

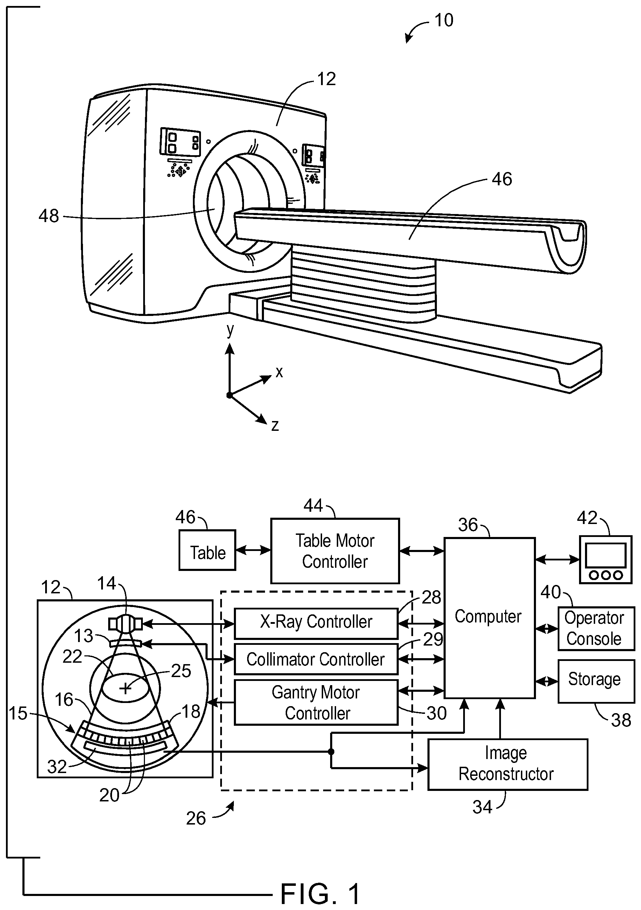

With the preceding in mind and referring to FIG. 1, a computed tomography (CT) imaging system 10 is shown, by way of example. The CT imaging system 10 includes a gantry 12. The gantry 12 has an X-ray source 14 that projects a beam of X-rays 16 toward a detector assembly 15 on the opposite side of the gantry 12. The X-ray source 14 projects the beam of X-rays 16 through a pre-patient collimator assembly 13 that determines the size and shape of the beam of X-rays 16. The detector assembly 15 includes a collimator assembly 18 (a post-patient collimator assembly), a plurality of detector modules 20 (e.g., detector elements or sensors forming a detector array), and data acquisition systems (DAS) 32. The plurality of detector modules 20 detect the projected X-rays that pass through a subject or object 22 being imaged, and DAS 32 converts the data into digital signals for subsequent processing. Each detector module 20 in a conventional system produces an analog electrical signal that represents the intensity of an incident X-ray beam and hence the attenuated beam as it passes through the subject or object 22. During a scan to acquire X-ray projection data, gantry 12 and the components mounted thereon rotate about a center of rotation 25 (e.g., isocenter) so as to collect attenuation data from a plurality of view angles relative to the imaged volume.

Rotation of gantry 12 and the operation of X-ray source 14 are governed by a control system 26 of CT imaging system 10. Control system 26 includes an X-ray controller 28 that provides power and timing signals to an X-ray source 14, a collimator controller 29 that controls a length and a width of an aperture of the pre-patient collimator 13 (and, thus, the size and shape of the beam of X-rays 16), and a gantry motor controller 30 that controls the rotational speed and position of gantry 12. An image reconstructor 34 receives sampled and digitized X-ray data from DAS 32 and performs high-speed image reconstruction. The reconstructed image is applied as an input to a computer 36, which stores the image in a storage device 38. Computer 36 also receives commands and scanning parameters from an operator via console 40. An associated display 42 allows the operator to observe the reconstructed image and other data from computer 36. The operator supplied commands and parameters are used by computer 36 to provide control signals and information to DAS 32, X-ray controller 28, collimator controller 29, and gantry motor controller 30. In addition, computer 36 operates a table motor controller 44, which controls a motorized table 46 to position subject 22 and gantry 12. Particularly, table 46 moves portions of subject 22 through a gantry opening or bore 48.

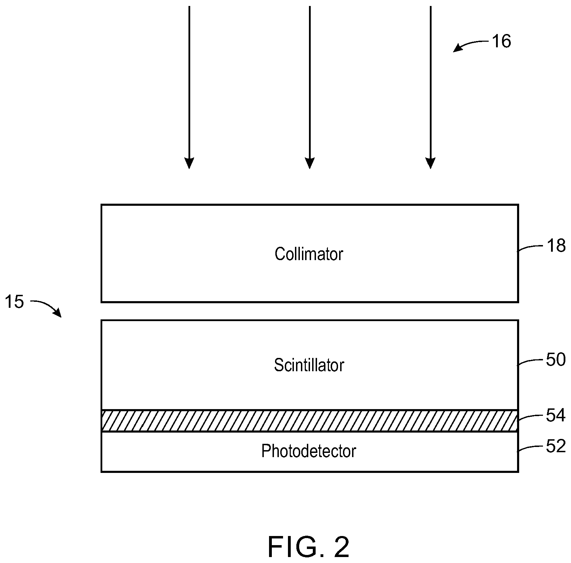

Referring now to FIG. 2, a schematic side view of a detector assembly 15 operating in accordance with certain aspects of the present disclosure is illustrated. During imaging, radiation 16 (e.g., X-rays) from the X-ray source 14 impinges on a scintillator 50 after being attenuated by an intervening subject or object undergoing imaging. In the depicted embodiment, the X-rays 16 are collimated by the collimator 18, after passing through the subject or object but prior to reaching the scintillator 50. Such collimation may provide some degree of X-ray scatter rejection and/or correction.

Typically, the scintillator 50 is formed from a substance that absorbs radiation 16 (for example X-ray photons) and in response emits light of a characteristic wavelength, such as an optical wavelength, thereby releasing the absorbed energy. Various types of scintillation materials may be employed which convert the radiation incident on the detector assembly 15, such as X-rays photons, into a form of radiation detectable by the photodetector layer 52 (e.g., detector array), e.g., a layer of photodiodes. The photodetector layer 52 generates analog electrical signals in response to the light emitted by the scintillator 50. The electrical signals generated by the photodetector layer 52 are in turn acquired by signal electronics 54. The signals from the signal electronics 54 may in turn be acquired by the data acquisition circuitry 32 (FIG. 1). As discussed above, the acquired signals are supplied to data processing circuitry and/or to image reconstruction circuitry.

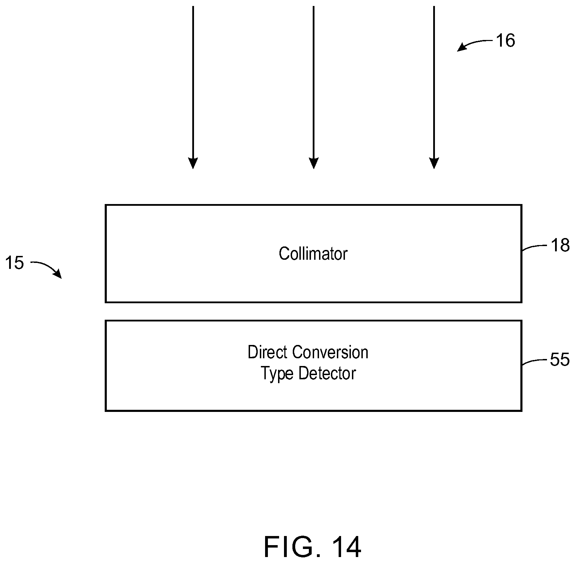

In certain embodiments, as depicted in FIG. 14, the detector assembly 15 includes the collimator 18 disposed over a direct-conversion type detector or detector array 55 (i.e., not employing a scintillator intermediary), such as a detector based on silicon strips or a detector based on CZT or CdTe. For example, the direct-conversion type detector may be a photon counting detector, including an energy-discriminating photon counting detector, whose outputs convey information about the number and energy of photons that impact the detector at measured positions and over a time interval corresponding to a scan or imaging session. In certain embodiments, the direct-conversion type detector 55 may be formed by a plurality of detector sub-modules or sensors (each having a plurality of detector elements or pixels such as photodiode or diodes).

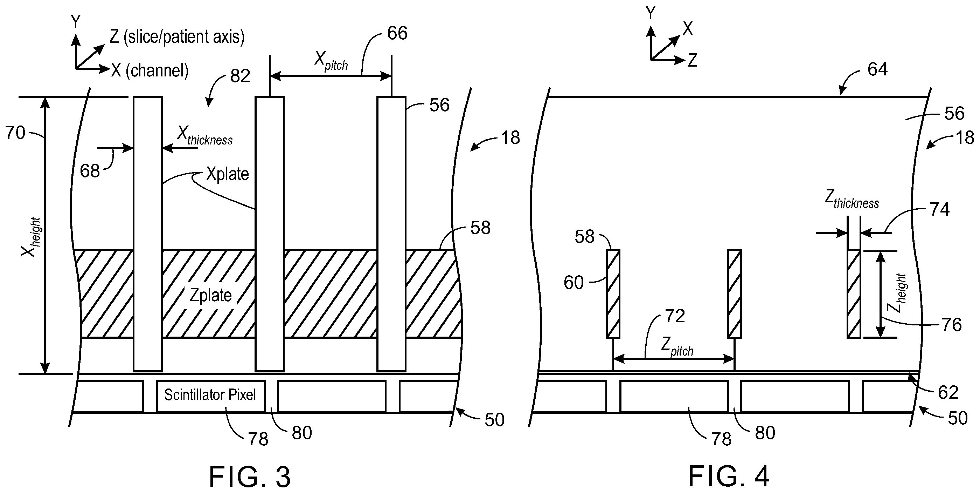

FIGS. 3 and 4 depict a schematic side views of a typical three-dimensional (3D) collimator geometry along the XY plane and YZ plane, respectively. In particular, FIGS. 3 and 4 depict a portion of the collimator 18 (3D collimator module) disposed over a portion of the scintillator 50. As depicted, the collimator 18 is disposed over (e.g., above) the scintillator 50. The collimator 18 includes a first plurality of plates or septa 56 (e.g., X plates) that extend in a Z direction or slice direction/patient axis that are disposed side by side in a spaced arrangement in an X direction or channel direction (which is orthogonal to the Z direction). The collimator 18 includes a second plurality of plates or septa 58 that extend in the X direction and which are disposed sided by side in the Z direction. Both the first plurality of plates 56 and the second plurality of plates 58 extend in a third direction (Y direction or direction of X-ray emission as shown in FIG. 2) orthogonal to both the X and Y directions to make the collimator 18 3D. Both the first plurality of plates 56 and the second plurality of plates 58 are configured to absorb scattered X-ray radiation. The plates 56, 58 may be made of tungsten, lead, molybdenum, or another radiation absorbing material. Each plate 58 extends through the plurality of plates 56 via a respective set of aligned slots 60 (formed within the plurality of plates 56).

As depicted, in FIG. 4, the slots 60 on a respective plate 56 are spaced apart in the Z direction along a length of the respective plate 56. As depicted, the slots 60 are located adjacent a bottom or lower edge 62 on the respective plate 56 relative to the Y direction. In certain embodiments, the slots 60 are located adjacent a top or upper edge 64 on the respective plate 56 relative to the Y direction. In certain embodiments, the slots 60 are centrally located on the respective plate 56 relative to the Y direction.

The plates 56 are spaced apart in the X direction with a center-to-center distance or a pitch 66 (e.g., X_{pitch}). Each plate 56 includes a thickness 68 (e.g., X_{thickness}) in the X direction. In certain embodiments, the thickness 68 may be 200 micrometers. Each plate 56 includes a height 70 (e.g., X_{height}) in the Y direction.

The plates 58 are spaced apart in the Z direction with a center-to-center distance or a pitch 72 (e.g., Z_{pitch}). Each plate 58 includes a thickness 74 (e.g., Z_{thickness}) in the Z direction. In certain embodiments, the thickness 74 may be 80 micrometers. Each plate 58 includes a height 76 (e.g., Z_{height}) in the Y direction. As depicted, the height 76 of each plate 58 is less than the height 70 of each plate 56. Typically, the height 76 is less than half the height 70.

As depicted, the scintillator 50 includes scintillator pixels or elements 78 (e.g., detector elements). The scintillator elements 78 are spaced apart and disposed within (and separated from each other) via a separator material 80. The separator material 80 optically isolates each scintillator pixel 78. The separator material 80 also reflects light.

An air layer 82 intervenes between adjacent plates 56 in the X direction. Similarly, an air layer (not shown) intervenes between adjacent plates 58 in the Z direction. Respective plates 56 are disposed over gaps between the scintillator elements 78. Respective plates 58 are also disposed over gaps between the scintillator elements 78. The crossing of a pair of adjacent plates 56 with a pair of adjacent plates 58 forms a common air layer disposed over a single scintillator element 78 or channel. The collimator 18 (e.g., 3D collimator module) as depicted in FIGS. 3 and 4 is subject to significant loss of geometric efficiency due to the thickness of the plates 56.

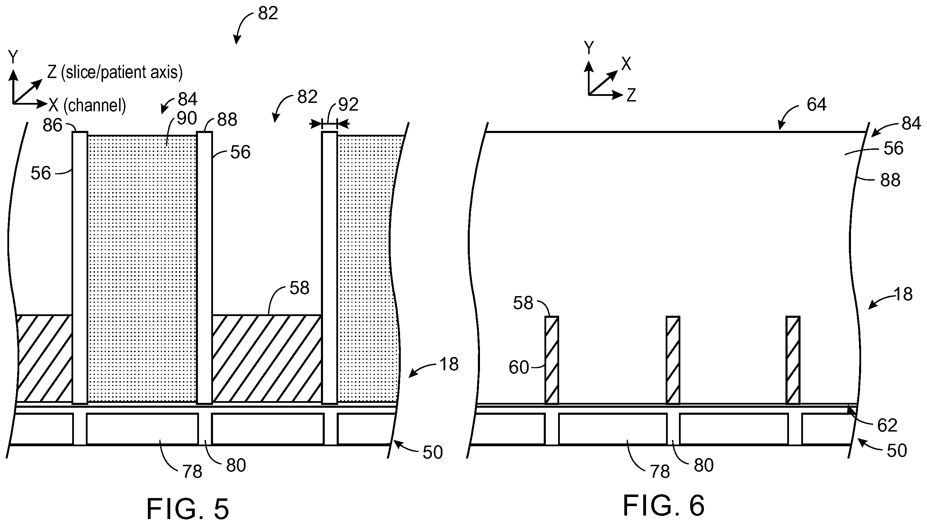

FIGS. 5 and 6 depict a schematic side views of a 3D collimator geometry along the XY plane and YZ plane (e.g., having stiffened X plate sets), respectively. In particular, FIGS. 5 and 6 depict a portion of the collimator 18 (3D collimator module) disposed over a portion of the scintillator 50. As depicted, the collimator 18 is disposed over (e.g., above) the scintillator 50. The collimator 18 includes a first plurality of collimator plate sets 84 (e.g., X plate sets) that extend in a Z direction or slice direction/patient axis that are disposed side by side in a spaced arrangement in an X direction or channel direction (which is orthogonal to the Z direction). The collimator plate sets 84 are formed from the plates or septs 56 (X plates). In particular, each collimator plate set 84 is formed of a first collimator plate 86 (e.g., first X plate), a second collimator plate 88 (a second X plate), and a joint layer 90 disposed between the first collimator plate 86 and the second collimator plate 88 that joins the first collimator plate 86 and the second collimator plate 88 together. As depicted, the joint layer 90 extends along the entire height 70 (e.g., X_{height}) of the plates 86, 88. In certain embodiments, the joint layer 90 is foam layer. In certain embodiments, the joint layer 90 is an epoxy layer. The joint layer 90 is transparent to radiation. The joint layer 90 is configured to stiffen the respective collimator plate set 84 to enable the first collimator plate 86 and the second collimator plate 88 to be thinner in the X direction compared to a collimator plate set without the joint layer between the first collimator plate and the second collimator plate (i.e., the plates 56 in FIGS. 3 and 4).

The collimator 18 includes a plurality of plates or septa 58 that extend in X direction and which are disposed sided by side in the Z direction. Both the collimator plate sets 84 and the plurality of plates 58 extend in the Y direction (or direction of X-ray emission as shown in FIG. 2) orthogonal to both the X and Z directions to make the collimator 18 3D. Both the collimator plate sets 84 and the plurality of plates 58 are configured to absorb scattered X-ray radiation. The plates 56 forming the collimator plate sets and the plates 58 may be made of tungsten, lead, molybdenum, or another radiation absorbing material. Each plate 58 extends through the collimator plate sets 84 via a respective set of aligned slots 60 (formed within the collimator plate sets 84).

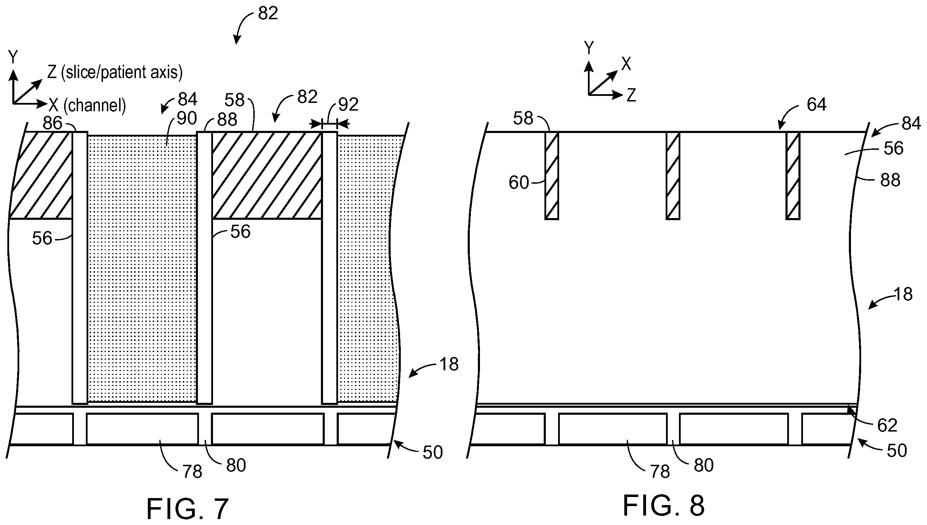

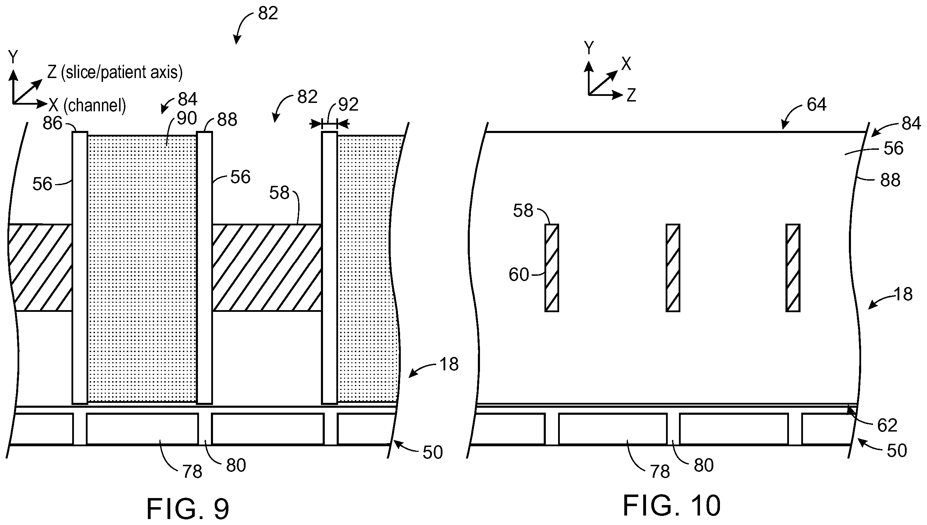

As depicted, in FIG. 6, the slots 60 on a respective collimator plate set 84 are spaced apart in the Z direction along a length of the respective collimator plate set 84. As depicted, the slots 60 are located adjacent (e.g., on or at) a bottom or lower edge 62 on the respective collimator plate set 84 relative to the Y direction. In certain embodiments, the slots 60 are located adjacent (e.g., on or at) a top or upper edge 64 on the collimator plate set 84 relative to the Y direction as depicted in FIGS. 7 and 8. In certain embodiments, the slots 60 are centrally located on the respective collimator plate set 84 relative to the Y direction as depicted in FIGS. 9 and 10.

Each plate 86, 88 of each collimator plate set 84 includes a thickness 92 in the X direction. The thickness 92 of each of the plates 86, 88 of each collimator plate set 84 is less than the thickness 68 of the plates 56 in FIGS. 2 and 3. In certain embodiments, the thickness 68 may range between 30 to 100 micrometers. The thinner plates 86,88 results in a significant improvement in geometric efficiency (e.g., 10 percent to 20 percent), which also results in a comparable improvement in dose efficiency of the system. Each plate 86, 88 of each collimator plate set 84 includes the height 70.

The plates 58 are spaced apart in the second direction with a center-to-center distance or a pitch 72 (e.g., Z_{pitch}) as depicted in FIG. 4. Each plate 56 includes a thickness 74 (e.g., Z_{thickness}) in the Z direction. In certain embodiments, the thickness 74 may be 80 micrometers. Each plate 58 includes a height 76 (e.g., Z_{height}) as depicted in FIG. 4. As depicted, the height 76 of each plate 58 is less than the height 70 of the plates 86, 88 of each collimator plate set 84. Typically, the height 76 is less than half the height 70. Thus, the slots 60 will not affect the mechanical strength of the plates 86, 88.

As depicted, the scintillator 50 includes scintillator pixels or elements 78. The scintillator elements 78 are spaced apart and disposed within (and separated from each other) via a separator material 80. The separator material 80 optically isolates each scintillator pixel 78. The separator material 80 also reflects light.

An air layer 82 intervenes between adjacent collimator plate sets 84 in the X direction. Similarly, an air layer (not shown) intervenes between adjacent plates 58 in the Z direction. Plates 86, 88 are disposed over gaps between the scintillator elements 78 (and flank a respective scintillator element 78) while the joint layer 90 is disposed over the respective scintillator element 78 being flanked by the plates 86, 88. Respective plates 58 are also disposed over gaps between the scintillator elements 78. The crossing of adjacent collimator plate sets with a pair of adjacent plates 58 forms a common air layer disposed over a single scintillator element 78 or channel.

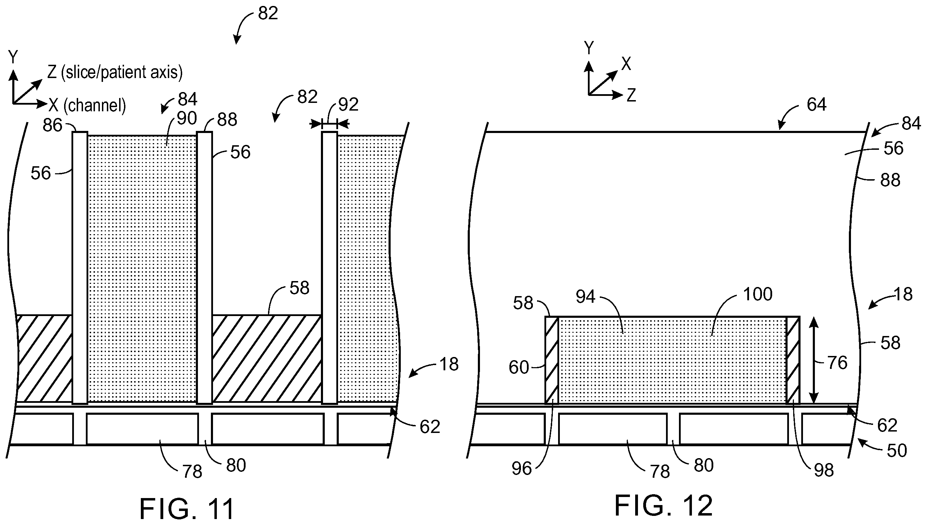

FIGS. 11 and 12 depict a schematic side views of a 3D collimator geometry along the XY plane and YZ plane (e.g., having stiffened X plate sets and stiffened Z plate sets), respectively. In particular, FIGS. 5 and 6 depict a portion of the collimator 18 (3D collimator module) disposed over a portion of the scintillator 50. As depicted, the collimator 18 is disposed over (e.g., above) the scintillator 50. The collimator 18 includes a first plurality of collimator plate sets 84 (e.g., X plate sets) that extend in a Z direction or slice direction/patient axis that are disposed side by side in a spaced arrangement in an X direction or channel direction (which is orthogonal to the Z direction). The collimator plate sets 84 are formed from the plates or septs 56 (X plates). In particular, each collimator plate set 84 is formed of a first collimator plate 86 (e.g., first X plate), a second collimator plate 88 (a second X plate), and a joint layer 90 disposed between the first collimator plate 86 and the second collimator plate 88 that joins the first collimator plate 86 and the second collimator plate 88 together. As depicted, the joint layer 90 extends along the entire height 70 (e.g., X_{height}) of the plates 86, 88. In certain embodiments, the joint layer 90 is foam layer. In certain embodiments, the joint layer 90 is an epoxy layer. The joint layer 90 is transparent to radiation. The joint layer 90 is configured to stiffen the respective collimator plate set 84 to enable the first collimator plate 86 and the second collimator plate 88 to be thinner in the X direction compared to a collimator plate set without the joint layer between the first collimator plate and the second collimator plate (i.e., the plates 56 in FIGS. 3 and 4).

The collimator 18 also includes a second plurality of collimator plate sets 94 (e.g., Z plate sets) that extend in a X direction and which are disposed sided by side in a spaced arrangement in the Z direction. The collimator plate sets 94 are formed from the plates or septs 58 (Z plates). In particular, each collimator plate set 94 is formed of a first collimator plate 96 (e.g., first Z plate), a second collimator plate 98 (a second X plate), and a joint layer 100 disposed between the first collimator plate 96 and the second collimator plate 98 that joins the first collimator plate 96 and the second collimator plate 98 together. As depicted, the joint layer 100 extends along the entire height 76 (e.g., Z_{height}) of the plates 96, 98. In certain embodiments, the joint layer 100 is foam layer. In certain embodiments, the joint layer 100 is an epoxy layer. The joint layer 100 is transparent to radiation.

Both the first plurality of collimator plate sets 84 and the second plurality of collimator plate sets 94 extend in the Y direction (or direction of X-ray emission as shown in FIG. 2) orthogonal to both the X and Z directions to make the collimator 18 3D. Both the first plurality of collimator plate sets 84 and the second plurality of collimator plate sets 94 are configured to absorb scattered X-ray radiation. The plates 56 forming the first plurality of collimator plate sets 84 and the plates 58 forming the second plurality of collimator plate sets 94 may be made of tungsten, lead, molybdenum, or another radiation absorbing material. Each collimator plate set 94 extends through the collimator plate sets 84 via a respective set of aligned slots 60 (formed within the collimator plate sets 84).

As depicted, in FIG. 6, the slots 60 on a respective collimator plate set 84 are spaced apart in the Z direction along a length of the respective collimator plate set 84. As depicted, the slots 60 are located adjacent (e.g., on or at) a bottom or lower edge 62 on the respective collimator plate set 84 relative to the Y direction. In certain embodiments, the slots 60 are located adjacent (e.g., on or at) a top or upper edge 64 on the collimator plate set 84 relative to the Y direction. In certain embodiments, the slots 60 are centrally located on the respective collimator plate set 84 relative to the Y direction.

Each plate 86, 88 of each collimator plate set 84 includes a thickness 92 in the X direction. The thickness 92 of each of the plates 86, 88 of each collimator plate set 84 is less than the thickness 68 of the plates 56 in FIGS. 2 and 3. In certain embodiments, the thickness 68 may range between 30 to 100 micrometers. The thinner plates 86,88 results in a significant improvement in geometric efficiency (e.g., 10 percent to 20 percent), which also results in a comparable improvement in dose efficiency of the system. Each plate 86, 88 of each collimator plate set 84 includes the height 70.

Each plate 96, 98 of the collimator plate set 94 includes a height 76 (e.g., Z_{height}) as depicted in FIG. 4. As depicted, the height 76 of each plate 96, 98 of the collimator plate set 94 is less than the height 70 of the plates 86, 88 of each collimator plate set 84. Typically, the height 76 is less than half the height 70. Thus, the slots 60 will not affect the mechanical strength of the plates 86, 88.

As depicted, the scintillator 50 includes scintillator pixels or elements 78. The scintillator elements 78 are spaced apart and disposed within (and separated from each other) via a separator material 80. The separator material 80 optically isolates each scintillator pixel 78. The separator material 80 also reflects light.

An air layer 82 intervenes between adjacent collimator plate sets 84 in the X direction. Similarly, an air layer (not shown) intervenes between adjacent collimator plate sets 94 in the Z direction. Plates 86, 88 are disposed over gaps between the scintillator elements 78 (and flank a respective scintillator element 78) while the joint layer 90 is disposed over the respective scintillator element 78 being flanked by the plates 86, 88. Respective plates 58 are also disposed over some of the gaps between the scintillator elements 78. The crossing of adjacent collimator plate sets with a pair of adjacent plates 58 forms a common air layer disposed over one or more scintillator elements 78 or channels.

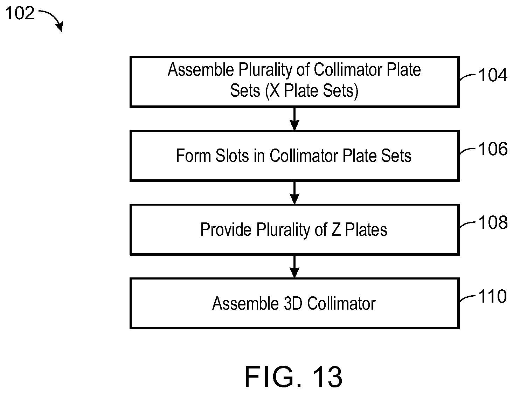

FIG. 13 is a flow chart of a method 102 for manufacturing a 3D collimator. The method 102 includes assemble a plurality of collimator plate sets (block 104). Each collimator plate set includes a first collimator plate (first X plate), a second collimator plate (second X plate), and a joint layer disposed between the first collimator plate and the second collimator plate that joins the first collimator plate and the second collimator plate together. In certain embodiments, the joint layer is a foam layer. In certain embodiments, the joint layer is an epoxy layer.

The method 102 also includes forming slots in the plurality of collimator plate sets for receiving Z plates (block 106). Respective slots for receiving a respective Z plate are aligned on the collimator plate sets. The slots may be formed via laser cutting, wire EDM, or other technique.

The method 102 further includes providing a plurality of Z plates (block 108). The method 102 even further includes assembling the 3D collimator by inserting the Z plates into the corresponding slots of the plurality of collimator plate sets (collimator X plate sets) (block 110). In the assembled 3D collimator, the plurality of collimator plate sets are lined up side by side in a channel direction. A respective air layer intervenes between adjacent collimator plate sets of the plurality of collimator plate sets. The joint layer is configured to stiffen a respective collimator plate set to enable the first collimator plate and the second collimator plate to be thinner in the channel direction compared to a collimator plate set without the joint layer between the first collimator plate and the second collimator plate.

In the assembled 3D collimator, the Z plates are lined up side by side (also spaced apart with intervening air layers) in a slice direction orthogonal to the channel direction. Both the plurality of collimator plate sets and the plurality of collimator plates (Z plates) extend in a Y direction orthogonal to both the channel direction and the slice direction to form the three-dimensional collimator module. In certain embodiments, the joint layer is a foam layer. In certain embodiments, the joint layer is an epoxy layer. In certain embodiments, the additional collimator plate sets are inserted into the corresponding slots of the plurality of collimator plate sets (collimator X plate sets).

In certain embodiments, the plurality of Z plates may be assembled into additional collimator plate sets (collimator Z plate sets). Each collimator plate set of the additional plurality of collimator plate sets includes a first collimator plate (first Z plate), a second collimator plate (second Z plate), and an additional joint layer disposed between the first collimator plate and the second collimator plate that joins the first collimator plate and the second collimator plate together.

Technical effects of the disclosed embodiments include providing for a technique to build a 3D collimator incorporating stiffened thin plates. This enables the achievement of good scatter rejection and geometric efficiency. Technical effects of the disclosed embodiments include enabling thinner plates (enabled by the stiffener) to significantly improve (expected improvement between 10 percent to 20 percent) geometric efficiency (compared to a 3D collimator utilizing plates with a typical thickness (e.g., 200 micrometers). Technical effects of the disclosed embodiments include providing a comparable improvement in dose efficiency of the system.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

The disclosure also provides support for a collimator module, comprising: a plurality of collimator plate sets lined up side by side in a first direction, wherein each collimator plate set of the plurality of collimator plate sets comprises a first collimator plate, a second collimator plate, and a joint layer disposed between the first collimator plate and the second collimator plate that joins the first collimator plate and the second collimator plate together, and wherein an air layer intervenes between adjacent collimator plate sets of the plurality of collimator plate sets; and a plurality of collimator plates lined up side by side in a second direction orthogonal to the first direction, wherein each collimator plate of the plurality of collimator plates extends through a respective set of aligned slots formed in the plurality of collimator plate sets, and both the plurality of collimator plate sets and the plurality of collimator plates extend in a third direction orthogonal to both the first direction and the second direction to form a three-dimensional collimator module. In a first example of the collimator module, the joint layer is configured to stiffen a respective collimator plate set to enable the first collimator plate and the second collimator plate to be thinner in the second direction compared to a collimator plate set without the joint layer between the first collimator plate and the second collimator plate. In a second example of the collimator module, optionally including the first example, the first direction is a slice direction, the second direction is a channel direction, and the third direction is a direction of X-ray emission. In a third example of the collimator module, optionally including one or both of the first and second examples, the joint layer comprises a foam layer. In a fourth example of the collimator module, optionally including one or more of each of the first through third examples, the joint layer comprises an epoxy layer. In a fifth example of the collimator module, optionally including one or more of each of the first through fourth examples, the respective set of aligned slots are formed in respective centers of the plurality of collimator plate sets relative to the third direction. In a sixth example of the collimator module, optionally including one or more of each of the first through fifth examples, the respective set of aligned slots are formed adjacent respective edges of the plurality of collimator plate sets relative to the third direction. In a seventh example of the collimator module, optionally including one or more of each of the first through sixth examples, the plurality of collimator plates comprise an additional plurality of collimator plate sets lined up side by side in the second direction, wherein each collimator plate set of the additional plurality of collimator plate sets comprises a third collimator plate, a fourth collimator plate, and an additional joint layer disposed between the third collimator plate and the fourth collimator plate that joins the third collimator plate and the fourth collimator plate together, and wherein an additional air layer intervenes between adjacent collimator plate sets of the additional plurality of collimator plate sets. In an eighth example of the collimator module, optionally including one or more of each of the first through seventh examples, each collimator plate set of the additional plurality of collimator plate sets extends through the respective set of aligned slots formed in the plurality of collimator plate sets.

The disclosure also provides support for an imaging detector assembly, comprising: a detector array; and a three-dimensional (3D) collimator module disposed over the detector array, wherein the 3D collimator module comprises: a plurality of collimator plate sets lined up side by side in a first direction, wherein each collimator plate set of the plurality of collimator plate sets comprises a first collimator plate, a second collimator plate, and a joint layer disposed between the first collimator plate and the second collimator plate that joins the first collimator plate and the second collimator plate together, and wherein an air layer intervenes between adjacent collimator plate sets of the plurality of collimator plate sets; and a plurality of collimator plates lined up side by side in a second direction orthogonal to the first direction, wherein each collimator plate of the plurality of collimator plates extends through a respective set of aligned slots formed in the plurality of collimator plate sets, and both the plurality of collimator plate sets and the plurality of collimator plates extend in a third direction orthogonal to both the first direction and the second direction. In a first example of the imaging detector assembly, the joint layer is configured to stiffen a respective collimator plate set to enable the first collimator plate and the second collimator plate to be thinner in the second direction compared to a collimator plate set without the joint layer between the first collimator plate and the second collimator plate. In a second example of the imaging detector assembly, optionally including the first example, the first direction is a slice direction, the second direction is a channel direction, and the third direction is a direction of X-ray emission. In a third example of the imaging detector assembly, optionally including one or both of the first and second examples, the joint layer comprises a foam layer. In a fourth example of the imaging detector assembly, optionally including one or more or each of the first through third examples, the joint layer comprises an epoxy layer. In a fifth example of the imaging detector assembly, optionally including one or more or each of the first through fourth examples, the plurality of collimator plates comprise an additional plurality of collimator plate sets lined up side by side in the second direction, wherein each collimator plate set of the additional plurality of collimator plate sets comprises a third collimator plate, a fourth collimator plate, and an additional joint layer disposed between the third collimator plate and the fourth collimator plate that joins the third collimator plate and the fourth collimator plate together, and wherein an additional air layer intervenes between adjacent collimator plate sets of the additional plurality of collimator plate sets. In a sixth example of the imaging detector assembly, optionally including one or more or each of the first through fifth examples, each collimator plate set of the additional plurality of collimator plate sets extends through the respective set of aligned slots formed in the plurality of collimator plate sets.

The disclosure also provides support for a computed tomography (CT) imaging system, comprising: a radiation source configured to emit radiation; and a CT detector assembly configured to detect incident radiation, comprising: a detector array; and a three-dimensional (3D) collimator module disposed over the detector array, wherein the 3D collimator module comprises: a plurality of collimator plate sets lined up side by side in a first direction, wherein each collimator plate set of the plurality of collimator plate sets comprises a first collimator plate, a second collimator plate, and a joint layer disposed between the first collimator plate and the second collimator plate that joins the first collimator plate and the second collimator plate together, and wherein an air layer intervenes between adjacent collimator plate sets of the plurality of collimator plate sets; and a plurality of collimator plates lined up side by side in a second direction orthogonal to the first direction, wherein each collimator plate of the plurality of collimator plates extends through a respective set of aligned slots formed in the plurality of collimator plate sets, and both the plurality of collimator plate sets and the plurality of collimator plates extend in a third direction orthogonal to both the first direction and the second direction. In a first example of the CT imaging system, the first direction is a slice direction, the second direction is a channel direction, and the third direction is a direction of radiation emission. In a second example of the CT imaging system, optionally including the first example, the first direction is a channel direction, the second direction is a slice direction, and the third direction is a direction of radiation emission. In a third example of the CT imaging system, optionally including the one or both of the first and second examples, the joint layer comprises a foam layer or an epoxy layer.

This written description uses examples to disclose the present subject matter, including the best mode, and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A collimator module (18), comprising:
a plurality of collimator plate sets (84) lined up side by side in a first direction, wherein each collimator plate set (84) of the plurality of collimator plate sets (84) comprises a first collimator plate (86), a second collimator plate (88), and a joint layer (90) disposed between the first collimator plate (86) and the second collimator plate (88) that joins the first collimator plate (86) and the second collimator plate (88) together, and wherein an air layer (82) intervenes between adjacent collimator plate sets (84) of the plurality of collimator plate sets (84); and
a plurality of collimator plates (58) lined up side by side in a second direction orthogonal to the first direction, wherein each collimator plate (58) of the plurality of collimator plates (58) extends through a respective set of aligned slots (60) formed in the plurality of collimator plate sets (84), and both the plurality of collimator plate sets (84) and the plurality of collimator plates (58) extend in a third direction orthogonal to both the first direction and the second direction to form a three-dimensional collimator module (18).

2. The collimator module (18) of claim 1, wherein the joint layer (90) is configured to stiffen a respective collimator plate set (84) to enable the first collimator plate (86) and the second collimator plate (88) to be thinner in the first direction compared to a collimator plate set (84) without the joint layer (90) between the first collimator plate (86) and the second collimator plate (88).

3. The collimator module (18) of claim 1, wherein the first direction is a channel direction, the second direction is a slice direction, and the third direction is a direction of X-ray emission.

4. The collimator module (18) of claim 1, wherein the joint layer (90) comprises a foam layer.

5. The collimator module (18) of claim 1, wherein the joint layer (90) comprises an epoxy layer.

6. The collimator module (18) of claim 1, wherein the respective set of aligned slots (60) are formed in respective centers of the plurality of collimator plate sets (84) relative to the third direction.

7. The collimator module (18) of claim 1, wherein the respective set of aligned slots (60) are formed adjacent respective edges of the plurality of collimator plate sets (84) relative to the third direction.

8. The collimator module (18) of claim 1, wherein the plurality of collimator plates (58) comprise an additional plurality of collimator plate sets (94) lined up side by side in the second direction, wherein each collimator plate set (94) of the additional plurality of collimator plate sets (94) comprises a third collimator plate (96), a fourth collimator plate (98), and an additional joint layer (100) disposed between the third collimator plate (96) and the fourth collimator plate (100) that joins the third collimator plate (96) and the fourth collimator plate (100) together, and wherein an additional air layer intervenes between adjacent collimator plate sets (94) of the additional plurality of collimator plate sets (94).

9. The collimator module (18) of claim 8, wherein each collimator plate set (94) of the additional plurality of collimator plate sets (94) extends through the respective set of aligned slots (60) formed in the plurality of collimator plate sets (84).

10. An imaging detector assembly (15), comprising:
a detector array (52, 55); and
a three-dimensional (3D) collimator module (18) disposed over the detector array, wherein the 3D collimator module (18) comprises:
a plurality of collimator plate sets (84) lined up side by side in a first direction, wherein each collimator plate set (84) of the plurality of collimator plate sets (84) comprises a first collimator plate (86), a second collimator plate (88), and a joint layer (90) disposed between the first collimator plate (86) and the second collimator plate (88) that joins the first collimator plate (86) and the second collimator plate together, and wherein an air layer (82) intervenes between adjacent collimator plate sets (84) of the plurality of collimator plate sets (84); and
a plurality of collimator plates (58) lined up side by side in a second direction orthogonal to the first direction, wherein each collimator plate (58) of the plurality of collimator plates (58) extends through a respective set of aligned slots (60) formed in the plurality of collimator plate sets (58), and both the plurality of collimator plate sets (84) and the plurality of collimator plates (58) extend in a third direction orthogonal to both the first direction and the second direction.

11. The imaging detector assembly (15) of claim 10, wherein the joint layer (90) is configured to stiffen a respective collimator plate set (84) to enable the first collimator plate (86) and the second collimator plate (88) to be thinner in the first direction compared to a collimator plate set (84) without the joint layer (90) between the first collimator plate (86) and the second collimator plate (88).

12. The imaging detector assembly (15) of claim 11, wherein the first direction is a channel direction, the second direction is a slice direction, and the third direction is a direction of X-ray emission.

13. The imaging detector assembly (15) of claim 11, wherein joint layer (90) comprises a foam layer.

14. The imaging detector assembly (15) of claim 11, wherein the joint layer (90) comprises an epoxy layer.

15. The imaging detector assembly (15) of claim 11, wherein the plurality of collimator plates (58) comprise an additional plurality of collimator plate (94) sets lined up side by side in the second direction, wherein each collimator plate set (94) of the additional plurality of collimator plate sets (94) comprises a third collimator plate (96), a fourth collimator plate (98), and an additional joint layer (100) disposed between the third collimator plate (96) and the fourth collimator plate (98) that joins the third collimator plate (96) and the fourth collimator plate together (98), and wherein an additional air layer intervenes between adjacent collimator plate sets (94) of the additional plurality of collimator plate sets (94).
